# EUROPÄISCHE PATENTSCHRIFT

(11) **EP 3 770 508 B1**
(45) Veröffentlichungstag und Bekanntmachung des Hinweises auf die Patenterteilung: **27.11.2024**
(21) Anmeldenummer: 20210385.9
(22) Anmeldetag: 27.11.2020
(51) Int. Cl.: F24C 7/08, F24C 15/20

(54) **GARVERFAHREN ZUM BETREIBEN EINES GARGERÄTES SOWIE GARGERÄT**
COOKING METHOD FOR OPERATING A COOKING DEVICE AND COOKING DEVICE
PROCÉDÉ DE CUISSON POUR OPÉRER UN APPAREIL DE CUISSON ET APPAREIL DE CUISSON

(43) Veröffentlichungstag der Anmeldung: 27.01.2021
(73) Patentinhaber: V-Zug AG, 6300 Zug (CH)
(72) Erfinder: Herlitzius, Clemens, 8834 Schindellegi (CH); Lippmann, Marcel, 6422 Steinen (CH); Rudolph, Jari, 8409 Winterthur (CH); Schönenberger, Marc, 8050 Zürich (CH)
(74) Vertreter: E. Blum & Co. AG

(56) Entgegenhaltungen:
- EP-A2- 1 619 443
- DE-A1- 102019 110 198

## Beschreibung

### Gebiet der Erfindung

Die Erfindung betrifft ein Garverfahren zum Zubereiten eines Garguts im Garraum eines Gargeräts. Der Garraum umfasst eine erste Öffnung und eine zweite Öffnung. Mit einem Verschluss kann die zweite Öffnung verschlossen werden. Im Weiteren umfasst das Gargerät einen ausserhalb des Garraums angeordneten Temperatursensor. Der Temperatursensor ist geeignet, aus dem Garraum durch die erste Öffnung austretendes Gasvolumen zu detektieren. Zudem bezieht sich die Erfindung auf ein Gargerät zur Durchführung dieses Garverfahrens.

### Hintergrund

Aus EP 2 279 682 ist ein Gargerät bekannt, das einen Dampfaustritt-Sensor besitzt, mit welchem der Austritt von Dampf aus dem Gargut detektiert werden kann. Der Dampfaustritt-Sensor umfasst eine Öffnung am Garraum und einen ausserhalb der Öffnung angeordneten Temperatursensor. Tritt Dampf aus dem Gargut aus, so kommt es zu einem Austritt von heissem Gas durch die Öffnung, was vom Temperatursensor gemessen werden kann. In EP 1 619 443 wird der Temperatursensor dazu eingesetzt, bei Dampfaustritt eine Klappe zu öffnen, was es erlaubt, dem Garraum Feuchte zu entziehen.

DE 10 2019 110198 zeigt ein Gargerät mit einem ausserhalb des Garraums angeordneten Sensor. Mittels des Sensors kann eine Fehlfunktion einer in einem Zuluftkanal angeordneten Klappe detektiert werden.

### Darstellung der Erfindung

Es stellt sich die Aufgabe, ein Garverfahren der eingangs genannten Art bereitzustellen, während welchem mit einem ausserhalb des Garraums angeordneten Temperatursensor Messungen bezüglich der im Garraum herrschenden Luftfeuchtigkeit durchgeführt werden können.

Die Aufgabe wird vom Gegenstand des unabhängigen Anspruchs gelöst.

Demgemäss dient ein Garverfahren dem Zubereiten eines Garguts im Garraum eines Gargeräts. Der Garraum umfasst eine Türe, eine erste Öffnung, eine zweite Öffnung und einen Verschluss zum Verschliessen der zweiten Öffnung.

Der Verschluss kann eine Klappe umfassen, die von einem Schritt- oder Servomotor mehr oder weniger weit über die zweite Öffnung geklappt oder geschoben werden kann. Der Verschluss kann somit kontinuierlich von einer geschlossenen in eine geöffnete Stellung überführt werden. Denkbar wäre auch eine Ausführung, bei welcher der Verschluss nur eine geschlossene oder eine offene Position einnehmen kann.

Das Gargerät umfasst einen ausserhalb des Garraums angeordneten Temperatursensor. Dieser dient der Detektion von aus dem Garraum durch die erste Öffnung austretenden Gasvolumen.

Während des Garverfahrens wird in einem ersten Schritt der Verschluss von einer ersten Position in eine zweite Position in Schliessrichtung bewegt, derart, dass durch die Bewegung in Schliessrichtung ein Überdruck im Garraum entsteht.

Bei der Bewegung handelt es sich um eine Schliessbewegung in Schliessrichtung. D.h. in der zweiten Position ist die zweite Öffnung weniger geöffnet als in der ersten Position. Der Öffnungsquerschnitt der zweiten Öffnung verkleinert sich aufgrund der Schliessbewegung. Bevorzugt ist die zweite Öffnung in der zweiten Position durch den Verschluss vollständig verschlossen.

Nach Verlassen der ersten Position, insbesondere nach Erreichen der zweiten Position, wird mittels des Temperatursensors eine Messung durchgeführt. "Nach Verlassen" oder "nach Erreichen" betrifft eine zeitliche Abfolge. D.h. die Messung kann beispielsweise unmittelbar nach dem Verlassen der ersten Position oder nach einer vorbestimmten Zeitspanne seit Verlassen der ersten Position durchgeführt werden. Beispielsweise kann auch über eine bestimmte Zeitspanne hinweg seit dem Zeitpunkt des Verlassens der ersten Position gemessen werden. So könnte beispielsweise während fünf Minuten seit Verlassen der ersten Position gemessen werden, ob ein Temperaturanstieg stattfindet. "Nach Erreichen der zweiten Position" bedeutet auch "Nach Verlassen der ersten Position".

Mittels der Messung des Temperatursensors kann die Luftfeuchtigkeit innerhalb des Garraums bestimmt werden.

Es wird die maximale Steigung (dT/dt) eines Temperaturanstiegs am Temperatursensor gemessen.

Eine nach dem Schliessen des Verschlusses bestimmte maximale Steigung eines Temperaturanstiegs (dT/dt), ist abhängig von dem durch die erste Öffnung strömenden Volumenstrom und der Garraumtemperatur. Im Weiteren ist der durch die erste Öffnung strömende Volumenstrom abhängig von der Abdampfrate des Gargutes. D.h. anhand der Bestimmung der Steigung des Temperaturanstiegs kann die Abdampfrate des Garguts ermittelt werden.

Die Messung des Volumenstroms mittels des Temperatursensors ist insbesondere auch aufgrund der thermischen Trägheit des Temperatursensors möglich. Je mehr "heisse" Luft am Temperatursensor vorbeiströmt, desto schneller nimmt der Temperatursensor die Temperatur des Luftstroms an. Deshalb gibt es eine Relation zwischen Volumenstrom und der Steigung des Temperaturanstiegs (dT/dt) .

Detektiert der Temperatursensor nach dem Schliessen des Verschlusses und bei konstanter Garraumtemperatur beispielsweise keinen Temperaturanstieg, so gibt das Gargut kein Gas in den Garraum ab. Wird der Verschluss nach der Messung wieder geöffnet, ist anzunehmen, dass im Garraum eine trockene Atmosphäre herrscht solange die zweite Öffnung offen gehalten bleibt.

Insbesondere wird die Messung innerhalb einer bestimmten Zeitspanne seit Verlassen der ersten Position durchgeführt, insbesondere innerhalb von 10 Minuten, insbesondere innerhalb von 5 Minuten, insbesondere innerhalb von 2 Minuten, insbesondere innerhalb von 1 Minute.

Die Abfolge der Verfahrensschritte, zuerst den Verschluss zumindest teilweise zu schliessen und anschliessend zu messen, hat den Vorteil, dass innerhalb eines kontrollierbaren Garraumklimas die Messung durchgeführt werden kann. D.h. durch Schliessen der zweiten Öffnung führt aus dem Gargut austretendes Gas zu einem Gasvolumenüberschuss im Garraum, welcher mit einem Überdruck im Garraum einhergeht. Ist die zweite Öffnung geschlossen, entweicht das überschüssige Gasvolumen nur durch die erste Öffnung, so dass der Austritt von Gas aus dem Garraum am ersten Temperatursensor möglichst präzise gemessen werden kann.

Insbesondere kann nach Durchführung der Messung der Verschluss zurück von der zweiten Position in die erste Position bewegt werden. Insbesondere handelt es sich dabei um eine Öffnungsbewegung.

Die Abfolge von Schliessen, Messen und Öffnen hat den Vorteil, dass für die Messung kurzzeitig ein kontrolliertes Garraumklima erzeugt wird, der Garvorgang aber nur möglichst geringfügig durch die Messung beeinflusst wird.

Mit Vorteil wird mittels des Temperatursensors der Volumenstrom durch die erste Öffnung gemessen. Dies ist möglich, weil die im Garraum herrschende Temperatur oberhalb der Temperatur ausserhalb des Garraumes liegt. Ein Temperaturanstieg am Temperatursensor ausserhalb des Garraums kann deshalb einem Überdruck im Garraum zugeordnet werden.

Das durch die erste Öffnung hindurchströmende Gasvolumen lässt einen Rückschluss auf die Abdampfrate des Garguts zu. D.h. es wird gemessen, in welchem Umfang Gas vom Gargut abgegeben wird. Gas entweicht insbesondere aus dem Gargut, wenn das Gargut eine Temperatur von 90°C überschritten hat.

Die Bestimmung der Luftfeuchtigkeit innerhalb des Garraums ermöglicht es, diese dem Nutzer beispielsweise anzuzeigen. Ist dem Benutzer die Luftfeuchtigkeit innerhalb des Garraums zu hoch oder zu niedrig kann er durch bekannte Massnahmen, beispielsweise durch Aktivieren oder Deaktivieren eines Dampfgenerators oder durch Verändern der Position des Verschlusses, die Atmosphäre im Garraum beeinflussen.

Mit Vorteil kann die mittels des Temperatursensors durchgeführte Messung zur Steuerung des Garverfahrens verwendet werden. In Abhängigkeit der Messung können beispielsweise
- eine Position des Verschlusses bestimmt werden, und/oder
- die Garraumtemperatur eingestellt werden, und/oder
- der Garvorgang beendet werden, und/oder
- die Betriebsleistung eines Gerätelüfters eingestellt werden, und/oder
- ein Dampfgenerator betrieben werden, und/oder
- eine neue Programmphase eingeleitet werden.

Mit Vorteil wird das erfinderische Garverfahren in einem trockenen Klima durchgeführt. Ein trockenes Klima herrscht beispielsweise in einem Heissluftbackofen oder einer Mikrowelle mit genügend Frischluftzufuhr. In diesen Garverfahren wird kein Wasserdampf mittels eines Dampfgenerators in den Garraum eingeführt, um das Gargut in einer künstlich herbeigeführten Dampfatmosphäre zu garen.

Erfindungsgemäß - umfasst die Erfindung ein Gargerät mit einer Steuerung, welche eines der beschriebenen Garverfahren ausführen kann.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 einen schematischen Schnitt durch ein Gargerät;
Fig. 2 einen Temperaturverlauf am Temperatursensor; und
Fig. 3 eine Korrelation zwischen maximalen Temperatursteigungen und Feuchtigkeit im Garraum bei einer bestimmten, konstant gehaltenen Garraumtemperatur.

### Weg zur Ausführung der Erfindung

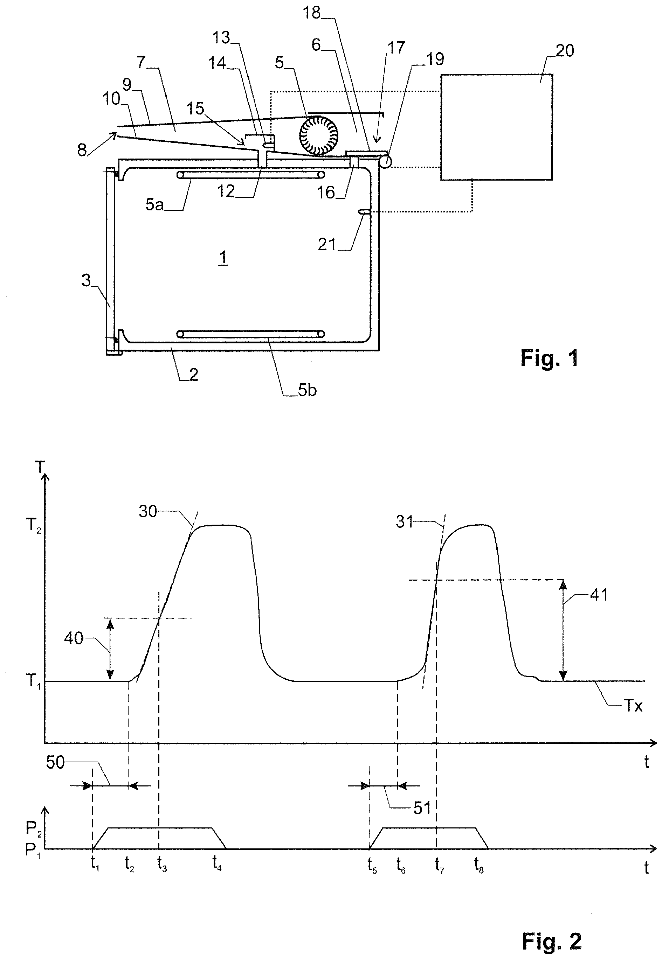

Das Gargerät gemäss Fig. 1, bei welchem es sich insbesondere um einen Backofen handelt, besitzt einen Garraum 1, der von Wänden 2 und einer Türe 3 begrenzt wird. Das als Beispiel gezeigte Gerät kann sowohl als Backofen, als auch als Dampfgargerät betrieben werden. Es besitzt eine konventionelle resistive Heizung mit Oberhitze 5a und Unterhitze 5b (welche sich, wie dargestellt, innerhalb des Garraums 1, aber auch ausserhalb des Garraums 1 befinden können). Die Heizung 5a, 5b dient dazu, die sich im Garraum befindlichen Gase aufzuheizen. Alternativ oder zusätzlich zur Heizung 5a, 5b kann das Gerät auch mit Heissluft, mit einem Grill-Heizkörper oder mit einem Dampfgenerator ausgestattet sein.

Ausserhalb des Garraums 1 ist ein Querstromlüfter 5 als Gebläse angeordnet. Je nach benötigter Bauform können auch andere Lüftertypen, wie z.B. Radiallüfter, eingesetzt werden. Der Lüfter fördert Luft von einem Ansaugbereich 6 in einen Druckraum 7. Vom Druckraum 7 tritt die geförderte Luft durch eine frontseitige Austrittsöffnung 8 des Geräts in die Umgebung aus. Der Druckraum 7 wird nach oben durch eine geneigte Deckplatte 9 und nach unten durch eine geneigte Bodenplatte 10 begrenzt, derart, dass sich der Druckraum 7 gegen die Austrittsöffnung 8 hin verjüngt. Seitlich ist der Druckraum durch Seitenwände (nicht gezeigt) geschlossen. Die sich gegen die Austrittsöffnung 8 hin verjüngende Ausgestaltung des Druckraums 7 ist nicht unbedingt notwendig. Denkbar ist auch eine im Wesentlichen parallele Führung der Deckplatte 9 und der Bodenplatte 10.

In der Decke des Garraums 1 sind eine erste Öffnung 12 und eine zweite Öffnung 16 angeordnet. Öffnung 16 besitzt einen Durchmesser von rund 2.5 cm, Öffnung 12 ist vorzugsweise kleiner.

Im Weiteren besitzt das Gerät einen Temperatursensor 13, welcher in einem Schutzgehäuse 14 angeordnet ist. Der Temperatursensor misst eine Temperatur Tx. Die erste Öffnung 12 ist immer geöffnet. Das Schutzgehäuse 14 ist im Druckraum 7 angeordnet und kommuniziert mit diesem über eine Verbindungsöffnung 15. Die Verbindungsöffnung 15 befindet sich auf der dem Gebläse abgewandten Seite des Schutzgehäuses 14.

Eine zweite, verschliessbare Öffnung 16 verbindet den Garraum 1 mit dem Ansaugbereich 6 vor dem Gebläse 5. Zum Verschliessen der zweiten Öffnung 16 ist ein Verschluss 17 vorgesehen, der aus einer Klappe 18 besteht, die von einem Schritt- oder Servomotor 19 mehr oder weniger weit über die Mündung der zweiten Öffnung 16 geschoben werden kann, derart dass der Verschluss im Wesentlichen kontinuierlich von einer geschlossenen in eine geöffnete Stellung übergeführt werden kann. Denkbar ist auch eine Ausführung, bei welcher die Klappe 18 nur eine geschlossene und eine offene Stellung einnehmen kann.

Zum Steuern des Verschlusses 17 und der weiteren Komponenten des Gargeräts ist eine Steuerung 20 vorgesehen, die unter anderem das vom Temperatursensor 13 abgegebene Temperatursignal überwacht.

Im Garraum 1 ist ferner ein Garraumtemperatur-Sensor 21 vorgesehen, mit welchem die Temperatur des Garraums gemessen werden kann. Weiter kann auch ein Kerntemperatur-Sensor vorhanden sein (nicht gezeigt), beispielsweise in Form einer Nadel, die in das Gargut gestochen werden kann. In den im Folgenden beschriebenen Verfahren kommt dieser Kerntemperatur-Sensor jedoch nicht notwendigerweise zum Einsatz.

Im Betrieb des Gargeräts ist das Gebläse 5 dauernd im Betrieb. Seine Leistung kann jedoch bei Bedarf angepasst werden. Dabei saugt es Luft durch Öffnungen in der Rückwand und in den Seitenwänden des Gargeräts aus der Umgebung an. Diese Luft durchtritt den Ansaugbereich 6, wird in den Druckraum 7 geblasen und verlässt diesen durch die Austrittsöffnung 8. Da der Druckraum 7 gegen die Austrittsöffnung 8 hin verjüngt ist, entsteht dabei im Druckraum 7 ein leichter Überdruck, d.h. ein Druck, der höher als der Umgebungsdruck ist, während der Druck im Ansaugbereich 6 geringer ist. Damit muss im Garraum 1 ein gewisser Überdruck herrschen, damit der Temperatursensor 13 einen Temperaturanstieg erkennt, welcher durch entweichendes Gasvolumen aus dem Garraum verursacht wird. Andererseits kann durch Öffnen der Öffnung 16 dem Garraum 1 schnell und effizient Dampf entzogen werden.

Des Weiteren besteht die Aufgabe des Gebläses 5 darin, zur Kühlung des Geräts die Luft, die sich an der Aussenseite des Garraums erwärmt hat, nach aussen abzuführen.

Das hier gezeigte Gerät kann in verschiedenen Betriebsmodi betrieben werden, wozu die Steuerung 20 mit geeigneten Eingabeelementen versehen ist, über welche der Benutzer ein gewünschtes Programm auswählen kann. Insbesondere kann das Gerät in konventioneller Weise als Gargerät eingesetzt werden, zum Beispiel unter Eingabe einer gewünschten Garraumtemperatur.

Anhand der Fig. 2 soll nun die Funktionsweise des Temperatursensors 13 erläutert werden. Ausgangslage ist ein Garvorgang, bei welchem das Gargut im Garraum mittels Heissluft gegart wird. Es handelt sich beispielsweise um einen Umluft-Betrieb oder um einen Oberhitze/Unterhitze-Betrieb, wie es von üblichen Backöfen bekannt ist.

Während dem Heissluftbetrieb ist die zweite Öffnung 16 grundsätzlich offen. Die Klappe 18 überdeckt die zweite Öffnung 16 nicht.

Steigt die Temperatur des Gargutes beispielsweise auf über 90°C, entweicht Gas bzw. Dampf aus dem Gargut. Dieses Gas verlässt den Garraum 1 über die zweite Öffnung 16, weil im Ansaugbereich 6 im Vergleich zum Druckraum 7 ein geringerer Druck vorherrscht. Somit strömt bei geöffneter Klappe kaum oder gar keine Luft bzw. Dampf aus dem Garraum 1 durch die erste Öffnung 12 zum Temperatursensor 13. Während der Garraumtemperatur-Sensor 21 die Heisslufttemperatur des Garraums von beispielsweise 210°C misst, detektiert der Temperatursensor 13 hinter der ersten Öffnung 12 einen viel tieferen Temperaturwert von beispielsweise 40°C, weil, wie gesagt, kaum oder gar keine heisse Luft den Garraum 1 durch die erste Öffnung 12 verlässt, sondern Luft durch die erste Öffnung sogar in den Garraum 1 eintreten kann.

Der Temperatursensor 13 ist deshalb bei geöffneter Klappe 18 ungeeignet, eine Aussage über das Klima im Garraum 1 oder über den Zustand, beispielsweise die Abdampfrate, des Gargutes zu treffen. Soll mittels des Temperatursensors 13 eine Messung durchgeführt werden, muss zuerst die Klappe 18 geschlossen werden. D.h. die Klappe 18 wird von einer ersten offenen Position in eine zweite geschlossene Position bewegt. Nun können heisse Luft bzw. Dampf den Garraum im Wesentlichen nur noch durch die erste Öffnung 12 verlassen. Die heisse Luft bzw. der Dampf strömen am Temperatursensor 13 vorbei. Der Temperatursensor 13 detektiert eine Temperaturerhöhung.

Ein solcher Verlauf ist in Fig. 2 anhand eines Diagramms dargestellt. Das obere Diagramm zeigt den Temperaturverlauf der gemessenen Temperatur Tx. Das untere Diagramm zeigt die Öffnungsstellung der Klappe 18.

In einem ersten Szenario beginnt sich zum Zeitpunkt t1 die Klappe 18 zu schliessen. Die Klappe 18 bewegt sich von einer ersten Position P1 zu einer zweiten Position P2. Vorliegend ist die Klappe 18 in der Position P1 vollständig geöffnet und in der zweiten Position P2 vollständig geschlossen.

Vor dem Schliessen, d.h. bei geöffneter Klappe 18, wird am Temperatursensor 13 eine Temperatur T1 von ca. 40°C gemessen. Zu diesem Zeitpunkt herrscht im Garraum eine Temperatur von ca. 210°C. Kurz später nach dem Zeitpunkt t1, vorliegend zum Zeitpunkt t2, detektiert der Temperatursensor 13 einen Temperaturanstieg. Die Temperatur steigt bis zur Temperatur T2 und stabilisiert sich dort. T2 entspricht maximal der Garraumtemperatur von ca. 210°C. Zum Zeitpunkt t4 wird die Klappe 18 wieder geöffnet und die Temperatur fällt zurück auf die Temperatur T1.

Ein ähnliches, zweites Szenario beginnt zum Zeitpunkt t5. Die Klappe 18 wird geschlossen, der Temperatursensor 13 detektiert einen Temperaturanstieg hinauf auf die Temperatur T2, die Klappe 18 wird erneut geöffnet und die Temperatur fällt zurück auf die Temperatur T1. Im Vergleich zum ersten Szenario beginnend zum Zeitpunkt t1 wird beim zweiten Szenario beginnend zum Zeitpunkt t5 ein steilerer Temperaturanstieg detektiert.

In beiden Szenarien ermittelt die Steuerung die maximale Steigung 30, 31 der Temperatur, den absoluten Temperaturunterschied 40, 41 innerhalb einer vorbestimmten Zeitperiode und die Zeitverzögerung 50, 51 zwischen dem Verlassen der Position P1 der Klappe 18 bis zur Detektion des Temperaturanstieg zu den Zeitpunkten t2 und t6.

Es wurde festgestellt, dass die maximale Steigung 30, 31 der gemessenen Temperatur abhängig vom Volumenstrom durch die erste Öffnung 12 ist. Der Volumenstrom durch die erste Öffnung 12 ist umso grösser, je mehr Gas vom Gargut in den Garraum abgegeben wird. D.h. die maximale Steigung 30, 31 der gemessenen Temperatur ist ein Mass für die Abdampfrate des Lebensmittels. Mit anderen Worten lässt sich anhand der ermittelten maximalen Temperatursteigung ein Rückschluss auf den Zustand des Gargutes ziehen.

Umso mehr Gas das Gargut in den Garraum abgibt, umso feuchter zeigt sich das Klima innerhalb des Garraums bei einer gegebenen Schieberstellung. Somit ist auch die Feuchtigkeit innerhalb des Garraums abhängig von der ermittelten maximalen Temperatursteigung.

Im ersten Szenario ist die maximale Temperatursteigung 30 geringer als die maximale Temperatursteigung 31 im zweiten Szenario. Dies bedeutet, dass im zweiten Szenario eine höhere Abdampfrate vom Gargut ausgeht als im ersten Szenario. Im Wissen um die im Garraum herrschende Temperatur und um die Position der Klappe 18, kann anhand der Abdampfrate auf die im Garraum herrschende Luftfeuchtigkeit zurückgeschlossen werden. Vorliegend wird für das erste Szenario eine Feuchtigkeit von 26 Vol% im Garraum ermittelt. Im zweiten Szenario wird aufgrund der grösseren maximalen Steigung eine Feuchtigkeit von 42 Vol% ermittelt. Diese Werte können anhand von Eichmessungen für unterschiedliche Garraumtemperaturen und unterschiedliche Klappenpositionen ermittelt und im Gargerät eingespeichert werden.

Die ermittelten Zeitintervalle 50 und 51 stellen ebenfalls ein Mass für die Abdampfrate des Garguts dar. Je höher der Volumenstrom, umso schneller wird der Temperatursensor den Dampf detektieren und umso kürzer fällt das ermittelte Zeitintervall aus. Das ermittelte Zeitintervall 50 des ersten Szenarios ist länger als das ermittelte Zeitintervall 51 des zweiten Szenarios. Dies gibt einen Rückschluss auf die Tatsache, dass im zweiten Szenario die Abdampfrate innerhalb des Garraumes grösser ist als im ersten Szenario. Bei gleicher Garraumtemperatur und gleicher Schieberposition ist auch der Rückschluss möglich, dass im zweiten Szenario die Luftfeuchtigkeit höher als im ersten Szenario ist.

Der Vorteil bei dieser Methode liegt darin, dass nach Ermittlung der Zeitintervalle 50 und 51 die Messung bereits beendet ist, der Schieber in die Ausgangsposition zurückgeführt werden kann, sodass das Messintervall möglichst kurz ausfällt und der Garprozess nur geringfügig vom Messvorgang beeinflusst wird.

Im Weiteren können auch die ermittelten absoluten Temperaturunterschiede 40 und 41 einen Rückschluss auf den Zustand des Gargutes bieten. Die Temperaturunterschiede 40 und 41 sind Temperaturveränderungen, welche innerhalb einer bestimmten Zeitperiode seit Verlassen der Position P1 ermittelt werden. Die Zeitperioden sind vorliegend von t1 bis t3 und von t5 bis t7. Diese beiden Zeitperioden sind identisch und vorbestimmt. Der Temperaturunterschied 41 ist grösser als der Temperaturunterschied 40. Dies erlaubt einen Rückschluss darauf, dass der Volumenstrom im zweiten Szenario grösser ist als im ersten Szenario.

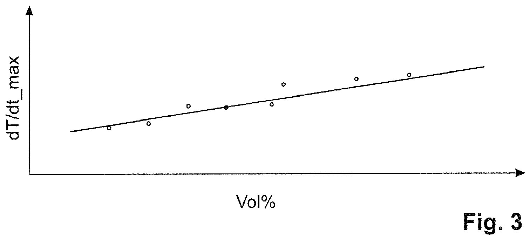

Die Fig. 3 zeigt schematisch eine Messreihe, welche den Zusammenhang der im Garraum ermittelten Feuchtigkeit in Vol% und der ermittelten maximalen Temperatursteigung am Temperatursensor 13 untersucht. Je steiler die Temperatur am Temperatursensor 13 ansteigt, umso höher ist bei gleicher Garraumtemperatur und gleicher Position P1 des Schiebers die im Garraum vorherrschende Feuchtigkeit. Dieser Zusammenhang ist geräteabhängig. Anhand einer Eichmessung kann dieser geprüft und in die Steuerung eingespeichert werden.

Nun zur Steuerung des Garprozesses: Rückschlüsse auf die Feuchtigkeit innerhalb des Garraums oder auf den Zustand des Garguts können der Steuerung des Garprozesses dienen. Im Weiteren können diese Messwerte dem Benutzer angezeigt werden. Dieser könnte aufgrund des angezeigten Messwertes das Garverfahren beispielsweise beenden.

Je nach Gargut ist im Garraum eine mehr oder weniger feuchte Atmosphäre erwünscht. Ist die ermittelte Feuchtigkeit im Garraum beispielsweise zu hoch, kann die Klappe 18 stärker geöffnet werden und/oder der Gerätelüfter wird auf einer höheren Stufe betrieben. Ist die ermittelte Feuchtigkeit im Garraum beispielsweise zu niedrig, kann die Klappe 18 stärker geschlossen werden und/oder der Gerätelüfter wird auf einer niedrigeren Stufe betrieben.

Im Weiteren gibt es Gargüter, wie beispielsweise tiefgefrorene Schinkengipfeli, welche weder in einer ganz trockenen noch in einer ganz feuchten Umgebung gegart werden sollten. Das erfindungsgemässe Verfahren erlaubt es, die Feuchtigkeit innerhalb des Garraums festzustellen, um anschliessend Schieber und Gerätelüfter derart zu steuern, dass die gewünschte Feuchtigkeit im Garraum vorhanden ist.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Garverfahren zum Zubereiten eines Garguts im Garraum (1) eines Gargeräts, wobei
- der Garraum (1) eine Türe (3), eine erste Öffnung (12), eine zweite Öffnung (16) und einen Verschluss (17) zum Verschliessen der zweiten Öffnung (16) aufweist,
- das Gargerät einen ausserhalb des Garraums (1) angeordneten Temperatursensor (13) zur Detektion von aus dem Garraum (1) durch die erste Öffnung (12) strömendes Gasvolumen aufweist,
**dadurch gekennzeichnet, dass**
während des Garverfahrens der Verschluss (17) von einer ersten Position (P1) in eine zweite Position (P2) in Schliessrichtung bewegt wird, derart, dass durch die Bewegung in Schliessrichtung ein Überdruck im Garraum entsteht,
und nach Verlassen der ersten Position, insbesondere nach Erreichen der zweiten Position (P2), eine Messung mittels des Temperatursensors (13) durchgeführt wird,
wobei mittels des Temperatursensors (13) die maximale Steigung (30, 31) einer Temperaturänderung und damit die Luftfeuchtigkeit innerhalb des Garraums (1) bestimmt wird, dies unter Berücksichtigung der Garraumtemperatur.

2. Garverfahren nach Anspruch 1, wobei in der zweiten Position (P2) die zweite Öffnung (16) vollständig verschlossen ist.

3. Garverfahren nach einem der vorangehenden Ansprüche, wobei mittels der Messung des Temperatursensors (13) der Volumenstrom durch die erste Öffnung (12) bestimmt wird, insbesondere wobei der Volumenstrom in Abhängigkeit der Garraumtemperatur bestimmt wird.

4. Garverfahren nach einem der vorangehenden Ansprüche, wobei mittels der Messung des Temperatursensors (13) der Volumenstrom von aus dem Gargut austretenden Gasvolumen bestimmt wird.

5. Garverfahren nach einem der vorangehenden Ansprüche, wobei in Abhängigkeit der Messung mittels des Temperatursensors (13),
- eine neue Soll-Position des Verschlusses (17) eingestellt wird, und/oder
- ein Dampfgenerator betrieben wird.

6. Garverfahren nach einem der vorangehenden Ansprüche, wobei in Abhängigkeit der Messung mittels des Temperatursensors (13) Prozessparameter des Garverfahrens geändert werden, insbesondere wobei
- der Garvorgang beendet wird, und/oder
- die Garraumtemperatur eingestellt wird, und/oder
- die Betriebsleistung eines Gerätelüfters eingestellt wird, und/oder
- eine neue Programmphase eingeleitet wird.

7. Garverfahren nach einem der vorangehenden Ansprüche, wobei während des Garverfahrens von ausserhalb des Garraums (1) kein Wasserdampf in den Garraum (1) zugeführt wird.

8. Garverfahren nach einem der vorangehenden Ansprüche, wobei die Messung mittels des Temperatursensors (13) innerhalb einer vorbestimmten Zeitspanne seit Verlassen der ersten Position (P1) durchgeführt wird, insbesondere innerhalb von 10 Minuten, insbesondere innerhalb von 5 Minuten, insbesondere innerhalb von 2 Minuten, insbesondere innerhalb von 1 Minute.

9. Gargerät aufweisend eine Steuerung, ausgestaltet zur Durchführung eines Garverfahrens nach einem der Ansprüche 1 bis 4, wobei das Gargerät zumindest den Garraum (1), die Türe (3), die erste Öffnung (12), die zweite Öffnung (16) und den Verschluss (17) zum Verschliessen der zweiten Öffnung (16) aufweist, sowie den ausserhalb des Garraums (1) angeordneten Temperatursensor (13) zur Detektion von aus dem Garraum (1) durch die erste Öffnung (12) strömendes Gasvolumen und einen Garraumtemperatur-Sensor (21) aufweist.

## Claims

1. A cooking method for preparing food in the cooking chamber of a cooking device, wherein
- the cooking chamber has a door, a first opening, a second opening and a closure for closing the second opening,
- the cooking device has a temperature sensor arranged outside the cooking chamber for detecting gas volume flowing out of the cooking chamber through the first opening,
**characterized in that**
during the cooking method the closure is moved from a first position to a second position in closing direction such that the movement in closing direction creates an excess pressure inside the cooking chamber,
and after leaving the first position, in particular after reaching the second position, a measurement is performed by the temperature sensor,
wherein the maximum slope of a temperature change and therefore the air humidity inside the cooking chamber is determined by the temperature sensor under consideration of the cooking chamber temperature.

2. The cooking method according to claim 1, wherein the second opening is completely closed in the second position.

3. The cooking method according to any one of the preceding claims, wherein the volume flow through the first opening is determined by the measurement of the temperature sensor, in particular wherein the volume flow is determined as a function of the cooking chamber temperature.

4. The cooking method according to any one of the preceding claims, wherein the volume flow of gas volumes escaping from the food is determined by the measurement of the temperature sensor.

5. The cooking method according to any one of the preceding claims, wherein in dependence on the measurement by the temperature sensor,
- a new target position of the closure is set, and/or
- a steam generator is operated.

6. The cooking method according to any one of the preceding claims, wherein in dependence on the measurement by the temperature sensor, process parameters of the cooking method are changed, in particular wherein
- the cooking process is ended, and/or
- the cooking chamber temperature is adjusted, and/or
- the operating power of a device fan is set, and/or
- a new program phase is initiated.

7. The cooking method according to any one of the preceding claims, wherein no water vapor is supplied to the cooking chamber from outside the cooking chamber during the cooking method.

8. The cooking method according to any one of the preceding claims, wherein the measurement by the temperature sensor is carried out within a predetermined period of time since leaving the first position, in particular within 10 minutes, in particular within 5 minutes, in particular within 2 minutes, in particular within 1 minute.

9. Cooking device having a control unit adapted for carrying out a cooking method according to any one of the claims 1 to 4, wherein the cooking device has at least the cooking chamber (1), the door (3), the first opening (12), the second opening (16) and the closure (17) for closing the second opening (16), as well as the temperature sensor (13) arranged outside the cooking chamber (1) for detecting gas volume flowing from the cooking chamber (1) through the first opening (12) and cooking chamber temperature sensor (21).

## Revendications

1. Procédé de cuisson pour préparer un aliment à cuire dans l'espace de cuisson (1) d'un appareil de cuisson, dans lequel
- l'espace de cuisson (1) présente une porte (3), une première ouverture (12), une deuxième ouverture (16) et un obturateur (17) pour fermer la deuxième ouverture (16),
- l'appareil de cuisson présente un capteur de température (13) disposé à l'extérieur de l'espace de cuisson (1) pour détecter le volume de gaz s'écoulant de l'espace de cuisson (1) à travers la première ouverture (12),
**caractérisé en ce que**
pendant le procédé de cuisson, l'obturateur (17) est déplacée d'une première position (P1) à une deuxième position (P2) dans le sens de l'obturateur, de telle sorte que le mouvement dans le sens de l'obturateur crée une surpression dans l'espace de cuisson,
et après avoir quitté la première position, en particulier après avoir atteint la deuxième position (P2), une mesure est effectuée au moyen du capteur de température (13),
la pente maximale (30, 31) d'une variation de température et donc l'humidité de l'air à l'intérieur de l'espace de cuisson (1) sont déterminées au moyen du capteur de température (13), ceci en tenant compte de la température de l'espace de cuisson.

2. Procédé de cuisson selon la revendication 1, dans lequel, dans la deuxième position (P2), la deuxième ouverture (16) est complètement fermée.

3. Procédé de cuisson selon l'une des revendications précédentes, dans lequel le débit volumique à travers la première ouverture (12) est déterminé au moyen de la mesure du capteur de température (13), en particulier dans lequel le débit volumique est déterminé en fonction de la température de l'espace de cuisson.

4. Procédé de cuisson selon l'une des revendications précédentes, dans lequel le débit volumique du volume de gaz sortant de l'aliment à cuire est déterminé au moyen de la mesure du capteur de température (13).

5. Procédé de cuisson selon l'une des revendications précédentes, dans lequel, en fonction de la mesure effectuée au moyen du capteur de température (13),
- une nouvelle position de consigne de l'obturateur (17) est réglée, et/ou
- un générateur de vapeur est utilisé.

6. Procédé de cuisson selon l'une des revendications précédentes, dans lequel, en fonction de la mesure effectuée au moyen du capteur de température (13), des paramètres de processus du procédé de cuisson sont modifiés, notamment dans lequel
- le procédé de cuisson est terminé, et/ou
- la température de l'espace de cuisson est réglée, et/ou
- la puissance de fonctionnement d'un ventilateur de l'appareil est réglée, et/ou
- une nouvelle phase de programme est lancée.

7. Procédé de cuisson selon l'une des revendications précédentes, dans lequel, pendant le procédé de cuisson, aucune vapeur d'eau n'est amenée dans l'espace de cuisson (1) depuis l'extérieur de l'espace de cuisson (1).

8. Procédé de cuisson selon l'une des revendications précédentes, dans lequel la mesure au moyen du capteur de température (13) est effectuée dans un laps de temps prédéterminé depuis que l'appareil de cuisson a quitté la première position (P1), en particulier dans les 10 minutes, en particulier dans les 5 minutes, en particulier dans les 2 minutes, en particulier dans les 1 minute.

9. Appareil de cuisson présentant une commande, conçue pour mettre en œuvre un procédé de cuisson selon l'une des revendications 1 à 4, l'appareil de cuisson présentant au moins l'espace de cuisson (1), la porte (3), la première ouverture (12), la deuxième ouverture (16) et l'obturateur (17) pour fermer la deuxième ouverture (16), ainsi que le capteur de température disposé à l'extérieur de l'espace de cuisson (1) pour détecter le volume de gaz s'écoulant de l'espace de cuisson (1) et un capteur de température de l'espace de cuisson (21).
